Europäisches Patentamt

European Patent Office

Office européen des brevets

(11) Veröffentlichungsnummer: **0 042 558**

A1

# (12) EUROPÄISCHE PATENTANMELDUNG

(21) Anmeldenummer: **81104547.5**

(22) Anmeldetag: **12.06.81**

(51) Int. Cl.³: **B 29 D 23/18**

(30) Priorität: **16.06.80 DE 3022620**

(43) Veröffentlichungstag der Anmeldung:
**30.12.81 Patentblatt 81/52**

(84) Benannte Vertragsstaaten:
**AT CH FR GB IT LI SE**

(71) Anmelder: **Teichfischer, Günther**
**Kapellenstrasse 11**
**D-3132 Clenze(DE)**

(72) Erfinder: **Teichfischer, Günther**
**Kapellenstrasse 11**
**D-3132 Clenze(DE)**

(54) **Verfahren zum Herstellen von Faltenmanschetten, Faltenschläuchen und ähnlichen Hohlkörpern aus thermoplastischen Kunststoffen.**

(57) Faltenbälge, (4) Dichtmanschetten und ähnliche Hohlkörper werden aus thermoplastischen Kunststoffen durch Blasen gegen die Innenflächen einer Form (3) hergestellt. Um eine möglichst gleichmäßige Wandstärke vom Grund der Falten bis zu den Spitzen zu erhalten, werden die Hohlkörper im noch plastisch verformbaren Zustand des Kunststoffes der Form (3) entnommen, axial gestaucht und im gestauchten Zustand unter die Fließtemperatur des Thermoplasten abgekühlt.

Es ist dadurch möglich, die Blasform mit für das Fließverhalten des thermoplastischen Kunststoffes günstigen weiten Faltenwinkeln zu gestalten.

EP 0 042 558 A1

Continental Gummi-Werke Aktiengesellschaft, 3000 Hannover


Verfahren zum Herstellen von Faltenmanschetten, Faltenschläuchen
und ähnlichen Hohlkörpern aus thermoplastischen Kunststoffen


Die Erfindung bezieht sich auf Verfahren zum Herstellen von Faltenmanschetten, Faltenschläuchen und ähnlichen Hohlkörpern aus thermoplastischen Kunststoffen durch Ausdehnen eines mit einem Druckmittel beaufschlagten Schlauchrohlings gegen die mit den Falten entsprechenden Rippen ausgebildete Innenfläche einer Außenform.

Faltenmanschetten und andere Balgkörper dienen auf vielen Gebieten der Technik beispielsweise zum Schutz von Kolbenstangen, Gestängehebeln u. dgl. vor Verschmutzungen und gleichzeitig auch zum Abdichten der für die beweglichen Maschinenteile vorgesehenen Öffnungen in Gehäusen und Zylindern gegen die Außenatmosphäre. Eine aus vielerlei Gründen vorteilhafte Herstellungsmethode dieser vergleichsweise komplizierten Formartikel ist das in der Praxis auch in großem Umfange angewandte Blasverfahren, wobei von in einfacher und wirtschaftlicher Weise glattzylindrisch stranggepreßten Schlauchrohlingen ausgegangen werden kann. Eine Eigenheit der hiernach hergestellten Faltenbälge ist die im Bereich der Falten von innen nach außen abnehmende Wandstärke, die sich aus dem unvermeidlichen Zerren des noch plastischen Werkstoffes beim Hineindehnen des am Faltengrund bereits an den Formrippen anliegenden Schlauchrohlings in die Hohlrippen hinein zum Ausformen der Falten ergibt. Diese Wandstärkenverminderung, deren Endmaß in den Faltenspitzen in erster Linie von dem Durch-

messerverhältnis vom Grund zur Spitze der Falten, daneben aber auch von dem Fließverhalten des elastomeren oder plastomeren Werkstoffes und nicht zuletzt noch von dem Flankenwinkel der Formrippen abhängt, kann nicht in allen Fällen hingenommen werden. Den Versuchen, diesem Nachteil durch Einstellen möglichst großer Flankenwinkel zu begegnen, waren von vornherein enge Grenzen gesetzt, weil Balgkörper mit im Anfangszustand größeren Faltenwinkeln im Gebrauch wiederum einer erhöhten Gefahr der Knickbildung unterliegen, wobei die einmal eingedrückten Falten nicht mehr von selbst herausspringen und die Balgkörper in der Folge durch Aufscheuern an den umfaßten Maschinenteilen schnell zerstört werden können. Eine andere Gegenmaßnahme besteht darin, schon die Wandstärke des als Ausgangshalbzeug dienenden Schlauchrohlings so stark zu wählen, daß ein Mindest-Endmaß in den Faltenspitzen mit Sicherheit nicht unterschritten wird. Als Nachteile sind dafür aber ein höherer Werkstoffverbrauch und höheres Gewicht und größere Steifigkeit der Balgkörper selbst in Kauf zu nehmen.

Der Erfindung liegt demgemäß als Aufgabe zugrunde, die Masseverteilung zwischen Grund und Spitze der Falten an den fertigen Balgkörpern zu vergleichmäßigen und in weiterer Folge die jeweils benötigte Werkstoffmenge und das Gewicht der Balgkörper zu verringern und gleichzeitig mit der möglichen Einhaltung gleicher Wandstärke in allen Bereichen ihr Verhalten gegen seitliches Ausknicken zu verbessern. Diese Aufgabe wird gemäß der Erfindung, ausgehend von Verfahren der eingangs geschilderten Art, dadurch gelöst, daß der vollständig ausgeformte Hohlkörper in plastisch verformbarem Zustand der Außenform entnommen, auf eine im Vergleich zur Formlänge wesentlich geringere Länge axial gestaucht und in gestauchtem Zustand unter die Fließtemperatur des Thermoplasten abgekühlt wird. Es empfiehlt sich dabei, den Hohlkörper außerhalb der Außenform bis zum ganzflächigen Anliegen benachbarter Falten aneinander zu stauchen.

Die Erfindung führt zu einem zweistufigen Herstellungsverfahren, das neben dem üblichen Ausformen der Falten in einem Blasvorgang einen nachfolgenden, im noch plastischen Zustand des Balgwerkstoffes außerhalb der Form vorgenommenen mechanischen Formungsvorgang umfaßt. Da der erste Schritt gleichsam nur die Rohware für den die endgültige Gestalt des Formlings bestimmenden und fixierenden zweiten Schritt liefert, kann die Querschnittsform der die Falten bildenden Innenrippen in der Außenform derart und mit so großen Winkeln gewählt werden, daß ein gleichmäßiges Hineindehnen des ursprünglich glattzylindrischen Schlauchrohlings in allen Bereichen ohne übermäßige Zerrungen und damit ein nahezu gleichbleibender Wandstärkeverlauf vom Faltengrund bis zur Spitze gewährleistet ist. Das anschließende Stauchen des auf diese Weise erhaltenen Blasformlings ändert an der Masseverteilung nichts mehr; es zwingt aber den Falten ihre endgültige Gestalt auf und bringt gleichzeitig den Balgkörper auf sein vorgesehenes Axial-Einbaumaß. Im Hinblick auf die erzielbaren Vorteile fällt die notwendige größere Länge der Blasform als einziger Nachteil kaum ins Gewicht.

Die Erfindung ist anhand der schematischen Darstellung der wesentlichen Verfahrensschritte in der Zeichnung verdeutlicht. In der Zeichnung ist:

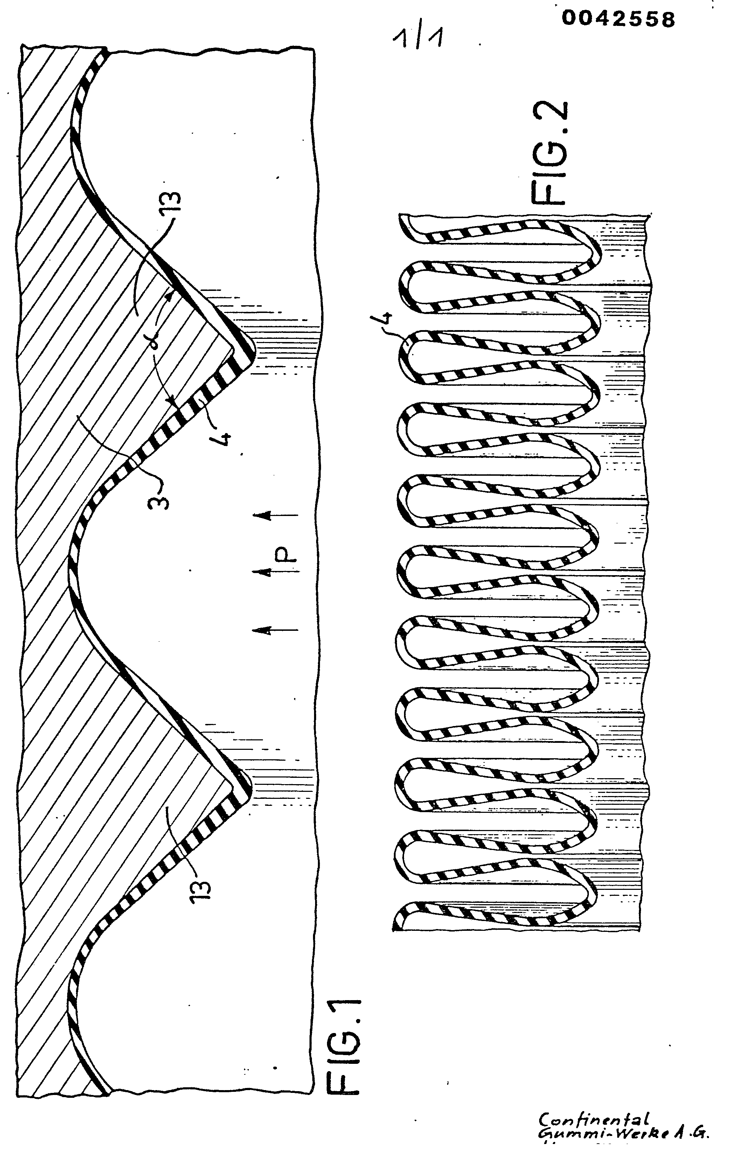

Fig. 1  ein Teilstück einer Blasform mit einem an ihren Innenwandungen anliegenden Abschnitt eines Balgrohlings und

Fig. 2  ein Teilstück eines fertig ausgeformten Balgkörpers.

Die Zeichnung beschränkt sich in beiden Figuren der Übersichtlichkeit halber auf die Darstellung jeweils nur einer Hälfte der rotationssymmetrischen Körper.

Die gezeichnete Blasform 3 hält sich hinsichtlich ihres konstruktiven Aufbaues und ihrer allgemeinen Beschaffenheit im Rahmen des Üblichen. Als Besonderheit im Vergleich zu bekannten Formen ist sie aber mit wesentlich größeren Winkeln $\alpha$ an der dem Faltengrund der Formlinge entsprechenden Spitze der Innenrippen 13 und in ähnlicher Weise weiter ausgerundeten Bogen im Außenbereich der Rippen ausgebildet. Diese für das Verfahren wichtige Winkelgröße $\alpha$ wird je nach den Umständen - Plastizität und Fließverhalten des thermoplastischen Kunststoffes, Innendurchmesser der Form, Höhe der Innenrippen 13 u.a.m. - so gewählt, daß der in der geschlossenen Außenform unter der Wirkung des Blasdruckes p aufgeweitete Schlauchrohling 4 sich mit Sicherheit ohne unzulässige Zerrungen und daraus folgende deutliche Wandstärkeverminderungen an die Formwandungen anlegt.

Unmittelbar nach Abschluß des Blasvorganges wird der vorgeformte Balg 4 der Form 3 entnommen und im noch plastischen Zustand vorzugsweise bis zur Blockbildung der Falten axial gestaucht und in dieser Form unter die Fließtemperatur des Kunststoffes abgekühlt. Um einem nachteiligen Zusammenhaften benachbarter Falten vorzubeugen, empfiehlt es sich, den Balgkörper vor dem endgültigen Fixieren seiner Gebrauchsgestalt um ein geringes Maß auseinanderzuziehen, so daß sich die in Fig. 2 gezeichnete Faltenform ergibt.

**Patentansprüche:**

1. Verfahren zum Herstellen von Faltenmanschetten, Faltenschläuchen und ähnlichen Hohlkörpern aus thermoplastischen Kunststoffen durch Ausdehnen eines mit einem Druckmittel beaufschlagten Schlauchrohlings gegen die mit den Falten entsprechenden Rippen ausgebildete Innenfläche einer Außenform, dadurch gekennzeichnet, daß der vollständig ausgeformte Hohlkörper in plastisch verformbarem Zustand der Außenform entnommen, auf eine im Vergleich zur Formlänge wesentlich geringere Länge axial gestaucht und in gestauchtem Zustand unter die Fließtemperatur des Thermoplasten abgekühlt wird.

2. Verfahren nach Anspruch 1, dadurch gekennzeichnet, daß der Hohlkörper außerhalb der Außenform bis zum ganzflächigen Anliegen benachbarter Falten aneinander gestaucht wird.

Hannover, den 13. Juni 1980
80-26 P/Sü          Sü/Lo

FIG.1

FIG.2

Continental
Gummi-Werke A.G.

0042558

Nummer der Anmeldung

EP 81 10 4547

Europäisches Patentamt

**EUROPÄISCHER RECHERCHENBERICHT**

| KLASSIFIKATION DER ANMELDUNG (Int. Cl.³) | | |
|---|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 4 079 111 (UHLIG)<br><br>* Zusammenfassung *<br><br>--- | 1,2 |
| | DE - B - 1 246 989 (FRIESEKE & HOEPFNER)<br><br>* Figur; Spalte 1, Zeilen 16-20 *<br><br>--- | 1,2 |
| | DE - B - 1 211 789 (HEGLER)<br><br>* Figur *<br><br>--- | 1,2 |
| | US - A - 3 714 311 (STEFANKA)<br><br>* Zusammenfassung *<br><br>--- | 1,2 |
| | US - A - 3 914 101 (STEFANKA)<br><br>* Zusammenfassung *<br><br>--- | 1,2 |
| | GB - A - 1 456 640 (DUNLOP)<br><br>* Patentanspruch 1 *<br><br>--- | 1,2 |
| | DE - A - 1 479 213 (FARBWERKE HOECHST)<br><br>* Figur; Patentanspruch *<br><br>--- | 1 |
| A | AU - B - 495 726 (LANGECKER)<br><br>* Figur 2; Seite 3, Zeilen 20-26 *<br><br>--------- | |

B 29 D 23/18

**RECHERCHIERTE SACHGEBIETE (Int. Cl.³)**

B 29 C

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-09-1981 | CORDENIER |

EPA form 1503.1 06.78